# EUROPEAN PATENT APPLICATION

(11) **EP 1 363 202 A1**
(43) Date of publication of application: **19.11.2003**
(21) Application number: 02354082.6
(22) Date of filing: 17.05.2002
(51) Int. Cl.: G06F 17/30

(54) **Producing an event zone or interactive map for a computerized device**

(71) Applicant: Accenture Global Services GmbH, 8212 Neuhausen Am Rheinfall, Schaffhausen (CH)
(72) Inventor: The designation of the inventor has not yet been filed
(74) Representative: de Beaumont, Michel

(57) **Abstract**

The present invention concerns a system for generating, on a computerized device, an event zone based application or algorithm, or an interactive map comprising several map levels (301, 302, 30n) among which at least one level (30n) comprises virtual objects describing geocoded elements on the map, the map also comprising event zones definitions and/or computerized actions (30d) executable by said computerized device and interacting directly with the geocoded elements.

## Description

### FIELD OF THE INVENTION

The present invention relates to computer based systems and methods for producing interactive maps or event zones for computerized devices such as personal digital assistants (PDA) and embedded computers. More specifically, the invention relates to an automatic system and a method for generating maps to be displayed on devices like personal digital assistants associated with a localization system such as a global positioning system (GPS) or analog, and setting up event zones which trigger events based on the location of the mobile computing device such as a PDA or embedded computers or other computing device.

### BACKGROUND

Systems for producing maps comprising several map levels to be displayed on a personal assistant and to be updated with respect to the location of the user are known. A map level corresponds to a layer of information (roads, hydrographical data, relief, etc.) to be superposed to other levels to build the map. Each level or layer is a digital picture generated by software. Once constructed, the map is transmitted to the mobile device in the form of a single set (digital file) comprising all the information of the different levels.

In such systems, at least one of the map levels comprises so called "points of interest" (POI) which are virtual objects describing a geocoded element on the map. For instance, points of interest correspond to buildings for public services (railway stations, post offices, parking lots, etc.), social services (hospitals, health services, etc.), tourism (hotels, restaurants, etc.), sport centers (stadium, swimming-pool, etc.), commercial centers (shopping malls, grocery stores, etc.), etc. Points of interest also correspond to works of art in a museum, stores in a shopping mall, and more generally detailed objects.

Conventionally, the geocoded points of interest are described by their properties inside the map itself. This description comprises the location of the point of interest (geocoded information), an icon (representing the point of interest), the name of the point of interest and other static information about the object. The map is then built by superposing, in a map server, several map levels among which at least one level comprises the information about the points of interest. Generally, a specific map level is dedicated to each type of point of interest.

A system for generating a map with points of interest and to display such a map on a personal assistant is described, for example in the European patent application number 0 978 794, entitled "Method and system for processing spatially-referred information such as cartographic information, applications and apparatus implementing said method".

In known systems, the point of interest levels are periodically updated in order to add information, for example about the traffic, the weather, etc. However, the information is always updated from the central system generating the map to the personal assistant display. Further, to obtain an action of the mobile device on an element represented by a point of interest, it is compulsory to transit through the map server.

It would be useful to allow the user of a personal assistant or analog on which maps are displayed to interact with some points of interest. For example, such an action could be initiating a hotel reservation, a phone call to the corresponding service, starting a machine in a workroom, etc.

There is a technical problem in giving, to a personal assistant or more generally to a mobile computerized device, the ability of interacting with a map comprising several levels and generated by a remote central system.

A purpose of the present invention is to produce an interactive map comprises several map levels among which at least one level comprising virtual objects describing geocoded elements.

Another purpose of the present invention is to update the map and more specifically the virtual object level(s) without downloading these level(s) from the map server.

### BRIEF SUMMARY OF THE INVENTION

To attain the above purposes and others, the present invention provides a satellite, computer, and communication based method and system for automatically producing an interactive map comprising several map levels among which at least one virtual object level. Such an object level is formed of geocoded point of interest icons associated with computerized executable or launchable applications acting directly on the geocoded element. Such executable or launchable applications are called hereafter methods and the association of a point of interest and such method(s), in a single or multi level of the map, is called an object of interest. Also included in this object level is the knowledge of pre-configured event zones which are comprised of single or aggregated geocoded points.

According to the invention, the methods or event zone(s) definition information are included either by the map server in the same level as the points of interest, or by an interface between the server and the distant device, or could be inclusively built into a holistic algorithm. In the second case, a map is generated in a conventional way and an additional map level comprising the methods of the objects of interest and event zone definitions are added to the other conventional levels in a final generating step, outside of the conventional central system. In the last case, the event zone definition is constantly checked with current geocoded information and once found to be in an event zone, the trigger and/or external logic and remote information sharing is activated from the distant device back to the server or via a man machine interface locally. The distant device can be a mobile device wirelessly connected to the server or more generally, any computerized device.

The application or interactive map of the present invention is updated on the basis of the location of the computerized device. In a preferred embodiment, some methods contained in the objects of interest are triggered on the basis of the location of the user device to get a direct response of the geocoded element without downloading an updated map or level from the map server.

### DESCRIPTION OF THE DRAWINGS

These purposes, features and advantages of preferred, non limiting, embodiments of the present invention, will be described by way of examples with reference to the accompanying drawings, in which:
Fig. 1 schematically represents the main elements of one exemplary embodiment of a system according to the present invention;
Fig. 2 illustrates the generation of an interactive map of several levels according to one exemplary embodiment of a method according to the present invention; and
Fig. 3 schematically illustrates, with a partial representation of the system, the exchanges of information between a personal assistant and a system for generating an interactive map according to one exemplary embodiment of the present invention.

For clarity, only the elements useful to the understanding of the invention have been shown in the drawings and will be disclosed hereafter. Especially, the programming steps according to the system of the invention and the method for definition and usage of the event zone definitions will not be detailed as it will readily occur to those skilled in the art. Further, reference will be made for a mobile device as exemplary computerized device usable according to the invention. However, any other computerized device can be used.

### DETAILED DESCRIPTION OF THE INVENTION

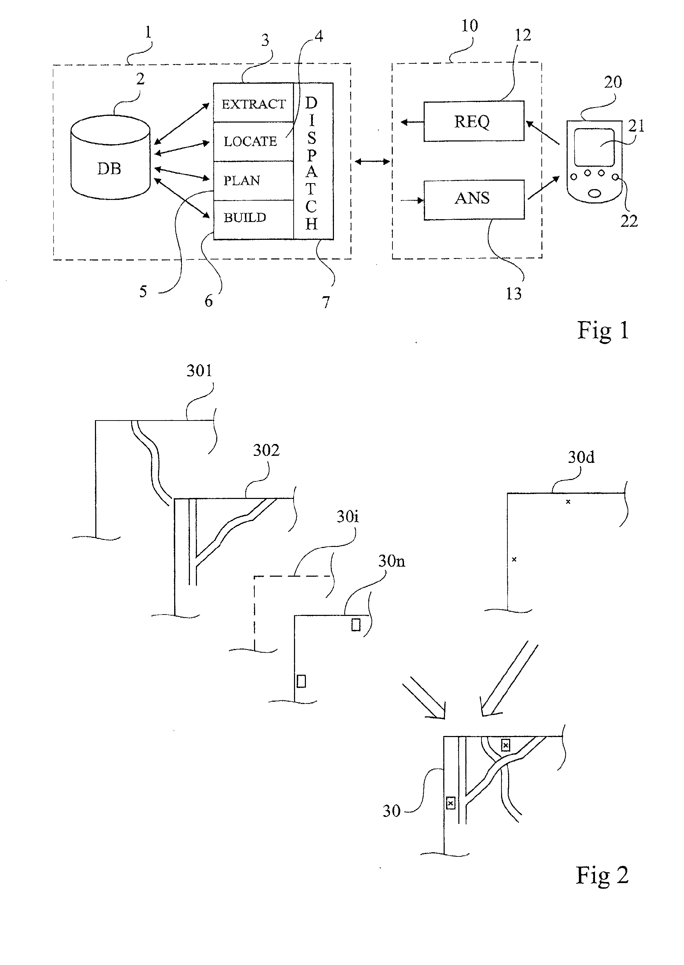

Figure 1 represents very schematically a system used in an exemplary embodiment of the present invention. A map server 1 provides topographical information. The map server comprises at least one database (DB) 2 containing the map levels to be used to generate a map. Alternatively, the database 2 could be replaced at least partially with a web link for downloading the necessary information to generate the map levels. The main tools of the map server are an extractor (EXTRACT) 3 for extracting the map levels from the database 2, a locator (LOCATE) 4 for taking into account the location of the user, a planer (PLAN) 5 for calculate itineraries, and a builder (BUILD) 6 for adding points of interest to the map levels.

Briefly, the elements 3, 4, 5 and 6 communicate with the database 2 and with a dispatcher (DISPATCH) 7. The dispatcher 7 communicates with an interface device 10, generally called a "map gateway". The map gateway 10 is used for analyzing the inputs received from, for example, a computerized mobile device 20 and sending requests to the map server. When receiving the requested files, the interface 10 converts these files to the format which is appropriate to the mobile device 20. The access from the interface 10 to the map server may be dedicated (direct access) or through a network (for example, the web). The main elements of the map gateway 10 are a request parser (REQ) 12 and an answer generator 13 (ANS).

The device 20 (for example, a personal digital assistant) comprises at least one screen 21 and keys 22 to enter requests or select icons on the screen.

All the above elements of the map server 1, of the map gateway 10 and of the mobile device 20 correspond, for example, to those described in the document EP-A-0 978 794 already cited.

When a user wishes to display a map on its personal assistant, he sends a request (for example in an XML format) by selecting the corresponding function in the personal assistant program. The request is received by the request parser 12 of the interface 10. The parser 12 sends the XML request to the map server 1. In response, the map server 1 generates the corresponding map and sends it back to the interface 10. The answer generator 13 then downloads the map to the personal assistant 20.

The points of interest of the type selected by the user are included in the map by the builder 6. Such an inclusion may be a function of the current condition (for example weather, traffic, vacancy) when generating the map.

Figure 2 illustrates an embodiment of the method for generating a map according to the present invention. The final map 30 is made of several static map levels 301, 302... 30i... 30n. For example, map levels 301 and 302 represent respectively a hydrographical level and a road level. The map level 30n represents a point of interest level which comprises the static information of geocoded elements of the kind selected by the user.

All these levels are superposed to form the map. According to this embodiment of the invention, at least one method level 30d is added to obtain the final map 30.

According to an example applied to restaurants, the map level corresponding to the points of interest comprises the location of restaurants on the map. Some conventional information may be the number of tables of the restaurants, the open hours, etc. According to the invention, the method layer comprises active information or method added to the points of interest, for example a launchable software to initiate a phone call or a reservation to that restaurant. According to the invention, such a phone call transits neither through the map server, nor through the map gateway but uses tools of the mobile device controllable according to the corresponding downloaded method. Such a reservation can be automatically confirmed by the restaurant directly to the user to the user device without needing a passage trough the map server to update the map.

An important feature of the invention is that the method or launchable software of an object of interest is downloaded in the distant device itself. Then, the device may communicate interactively with the points of interest without the help of the central system (for example if the mobile device comprises a GSM connection or analog). Further, the object of interest can send information (for example, a confirmation of a reservation in a restaurant or hotel) directly to the distant device.

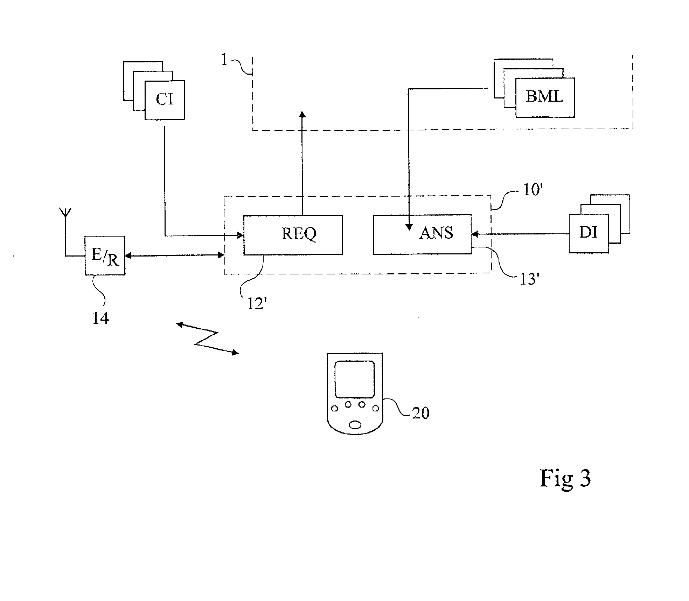

Figure 3 schematically and partially represents an interface system 10 according to the present invention between a server 1 and a mobile device 20 such as a personal assistant.

The system 10 comprises a request parser 12 and an answer generator 13. The mobile device 20 communicates with the system 10 preferably through a wireless link such as a Local Area Network (LAN) or a cellular network like the GSM. The system 10 is then associated to a wireless emitter/receiver (E/R) 14.

According to the present invention, when a user selects a desired type of points of interest that he wants to be displayed with a map, his request is sent to the request parser 12 which transmits it to the map server 1. The request parser 12 can also receive, conventionally, information CI coming from another database and relating to the points of interest to be added to the map levels. For example, if the system is used for searching vacant offices in a particular area, the points of interest are the offices and the information CI get by the request parser is information about the vacant offices in the area where is located the personal assistant. This information is used to include, in the map, only the vacant offices among all the offices contained in the database of the map server.

The following step consists in sending to the map server the characteristics of the map request. The map server then builds this map with the parameters received from the interface system 10. According to a simplified embodiment, the methods are added by the map server.

The built map levels BML are transmitted to the answer generator 13 which, according to a preferred embodiment, adds information and software application coming from sources other than the map server. The two embodiments can be combined with a final map downloaded to the mobile device and which comprises methods coming from the map server and from the map gateway. With the example of vacant offices, information DI added by the interface 10 to the map generated by the map server comprises, for example, pictures of the vacant offices.

According to a preferred embodiment of the present invention, the methods and actions are also added to the other levels after their generation by the map server. So, a conventional map server is used to generate the map with points of interest and the interface system 10 is used to add the methods. An advantage is that the methods are then independent from the map server.

In practice, methods correspond to computer code added to the computer file representing the map. Such a code may be imbricated in the map file, especially if generated by the map server, or added at the end of the file, especially if added by the map gateway.

Different actions can be launched by a manual click on the icon present on the screen, or through an automatic launch system based on the location of the mobile device with respect to the geocoded elements. Such an automatic location system may use a Global Positioning System (GPS), a GSM or any other known wide range or short range (Bluetooth) location system. For example, applied to objects of interest representing machines in a workroom, the automatically launched action can be to get the status of the machines closest from the user. A machine which receive the corresponding order sent automatically by the mobile device when it gets close to the machine, communicates its status directly to the distant device which updates its map (for example, changing the color of the icon representing that machine).

A first exemplary method implementing the present invention comprises:
- choosing a programmatic language which is common to the different elements for which one wants to describe the actions or methods; and
- including the software routines into the virtual object on the map levels (with also their static information).

In the reception terminal (mobile device), one then just needs an interface which converts if necessary the software language to launch the corresponding function or action.

A second exemplary method implementing the present invention comprises:
- building the map with only the static properties of the objects (without the actions or methods);
- extracting the map from the map server to the interface system; and
- adding the methods with the common software language and sending the final map to the mobile device. Alternatively, an interface could be used to convert the software language in order to launch the different actions.

In the reception terminal (personal assistant), such a method needs to combine the map with the different actions from their respective coordinates. In other words, one has to match the different levels in the mobile device.

When the map is present on the screen of the mobile device, the user may click on an icon representing one of the objects of interest. The click launches a software corresponding to the action downloaded with the corresponding point of interest. The type of action (for example, a phone call) is preferably the same for all the points of interest of the same type but is individualized depending on data dedicated to each point (for example, the phone number). Actions correspond to a part of the software code of the downloaded map stored in a memory of the mobile device.

An advantage of the present invention is that the communication between the mobile device and the geocoded element is direct and does not need transiting trough the map server. This direct communication is made in both direction. Again with the example of controlling machines, the mobile device contains the adapted software(s) to start, stop or make other action on the machines. The machine may respond directly to the mobile device for indicating its status (on/off).

For example, the present invention may apply for proximity services (for example tourism, information, local facilities, shopping malls); for large event coordination (assignment of issues to point of interest); for vacant office; or for field workers (big plants, large areas out of buildings).

Having thus described at least one illustrative embodiment of the invention, various alterations, modifications and improvements will readily occur to those skilled in the art. Such alterations, modifications, and improvements are intended to be within the spirit and scope of the invention. Accordingly, the foregoing description is by way of example only and is not intended to be limiting. The invention is limited only as defined in the following claims and the equivalents thereto.

## Claims

1. A system for generating, on a computerized device (20), an event zone or an interactive map comprising several map levels (301, 302, 30n) among which at least one level (30n) comprises virtual objects describing geocoded elements on the map, the map also comprising event zones and/or computerized actions (30d) executable by said computerized device and interacting directly with the geocoded elements.

2. The system of claim 1, comprising :
a map server (1) for building the map by extracting the map levels from at least one database (2); and
an interface system (10) communicating with the server and with said computerized device (20).

3. The system of claim 2, wherein, the actions are included in the map by the map server (1).

4. The system of claim 2, wherein, the actions are included (30d) in the map by the interface system (10).

5. The system of claim 1, wherein the mobile device (20) also comprises a localization element, said actions being automatically triggered on the basis of the location of said computerized device with respect to the geocoded elements and/or event zone.

6. An interface system (10) between a central map server (1) and at least one computerized device (20), said map server building a map comprising several map levels (301, 302, 30n) among which at least one level (30n) comprising virtual objects describing geocoded elements and/or event zones on the map, and said interface system adding to the map computerized actions (30d) corresponding to the virtual objects, said actions being executable by said computerized device and interacting directly with the geocoded elements.

7. A computerized device (20) for displaying an interactive map comprising several map levels (301, 302, 30n) among which at least one level (30n) comprising virtual objects describing geocoded elements on the map, said map also containing event zones or computerized actions (30d) corresponding to the virtual objects, said actions being executable by said computerized device and interacting directly with the geocoded elements.

8. The computerized device of claim 7, in which the event zone definition is constantly checked with current geocoded information, and in which once found to be in an event zone, the trigger and/or external logic and remote information sharing is activated from the computerized device back to the system of claim 1 or via a man machine interface on the computerized device itself.

9. An application or algorithm using event zone definitions cross-checked with geocoded location that triggers an application, information sharing, or other triggered event based on the computing device physical location within or close to an event zone.

10. The application or algorithm of claim 9, dedicated to a system according to any of claims 1 to 5.
